# EUROPEAN PATENT APPLICATION

(11) **EP 0 780 993 A2**
(43) Date of publication of application: **25.06.1997**
(21) Application number: 96308739.0
(22) Date of filing: 03.12.1996
(51) Int. Cl.: H04B 1/40, H04Q 7/32

(54) **Radiotelephone transceiver operative over more than one frequency range**

(30) Priority: 21.12.1995 US 576119
(71) Applicant: Lucent Technologies Inc., Murray Hill, New Jersey 07974-0636 (US)
(72) Inventor: Barthelmes, Stephen N., Englishtown, New Jersey 07726 (US); Strakovsky, Leonid, Rumson, New Jersey 07760 (US); Evans, James Gifford, Colts Neck, New Jersey 07722 (US); Trambarulo, Ralph Francis, Red Bank, New Jersey 07701 (US)
(74) Representative: Buckley, Christopher Simon Thirsk

(57) **Abstract**

A radiotelephone wireless communication apparatus is operative in both a first radiotelephone communication system including a first base station transmitting radiotelephone signals at a first band of frequencies and in a second radiotelephone communication system including a second base station transmitting radiotelephone signals at a second band of frequencies different in frequency from the first band of frequencies. The wireless radiotelephone communication apparatus has a common baseband circuitry (210,212,214,216,218,220,222,224) for operating with the first and second base stations along with first and second RF circuits, (200,400), to communicate with each of these same base stations.

## Description

### Background of the Invention

### 1. Field of the Invention

The present invention relates generally to wireless communication systems and, more particularly, to radiotelephone handsets operative over more then one frequency range.

### 2. Description of the Prior Art

Radiotelephones are used in a variety of wireless communications systems which may involve various air interface systems that have differing operating frequencies. These air interface systems include cellular radiotelephone systems and cordless telephone systems, as well as, other numerous wireless telephone system arrangements, such as, Personal Communication Networks (PCN) and services. Each of these arrangements requires a transceiver designed to operate in the frequency range, unique to that particular communication system. A radiotelephone handset is generally capable of operating in only one environment (i.e. cellular, cordless). Thus, to provide wireless communication services which operate across systems with varied interfaces having differing operating frequencies, requires a separate transceiver for each communication system.

Prior approaches to extend the use of a radiotelephone transceiver into more than one wireless communication system have included the joining of two separate radiotelephone handset units into one unitary package, with each handset operative in only one of the available wireless communication system frequency ranges. However, operation in a particular air interface system frequency range, with such an arrangement, is accomplished by switching from one unit to the other independent unit, as desired, so that only one of these independent handset units is in use at any time. Such an arrangement is described in U. S. Patent 4,989,230 which discloses a cellular/cordless telephone in which separate cellular and cordless transceivers are joined together in a single package.

Another approach to extend the use of a radiotelephone into more than one wireless communication system frequency range uses a pre-selected frequency within one of the wireless communication ranges to process signals, which is converted to an intermediate frequency within the second wireless communication frequency range for transmission to or reception from a base station. The term "process signals" refers to the forwarding of signals to or from the conversion and demodulation baseband circuitry of the communication device. As a specific example, received signals in one operational frequency band are heterodyned to produce a signal at a selected frequency in an inactive channel of another operational frequency band. Similarly, signals being transmitted can be heterodyned and translated in frequency from an inactive channel in one operational frequency band to an active channel for propagation in another operational frequency band. However, such an arrangement is not effective because signals propagated at frequencies nearby (within 100 kHz) to the pre-selected frequency used to process signals can overlap each other, interfering with the proper operation of the transceiver due to the intermixing of signals at more than one frequency.

Thus, it would be useful for a wireless radiotelephone to be operable over more then one frequency range in more than one interface environment without signal overlapping, which interferes with the proper operation of the handset.

### Summary

A wireless radiotelephone communication apparatus is operative in both a first radiotelephone communications system, including a first base station transmitting radio frequency signals at a first band of frequencies and in a second radiotelephone communication system including a second base station transmitting radiotelephone signals at a second band of frequencies different from the first band of frequencies. The radiotelephone communication apparatus has common conversion and demodulation/modulation baseband circuitry for operating with both the first base station and the second base station. The common baseband circuitry processes received radiotelephone signals from both of these base stations and processes signals generated by a user of the communication apparatus for transmission back to either of these base stations.

Radiotelephone signals received within the second band of frequencies are shifted to a band of frequencies substantially contiguous with the first band of frequencies. Radiotelephone signals to be transmitted within the second band of frequencies are shifted to the second band of frequencies from a band of frequencies substantially contiguous with the first band of frequencies.

A band of frequencies substantially contiguous with the first band of frequencies is used to process received and transmitted signals within the second band of frequencies into and out of the common baseband circuitry. The substantially contiguous band of frequencies includes a range of frequencies that are processable using the same baseband circuitry as for the first band of frequencies, but sufficiently removed to prevent the intermixing of signals between the first and contiguous bands of frequencies from interfering with the proper operation of the communication equipment.

The radiotelephone communication apparatus, in an illustrative embodiment according to the invention, includes first and second RF circuits, for communicating with the first and second base stations. The first RF circuit processes signals within the first band of frequencies for transmission to and from the first base station. The second RF circuit processes signals within the second band of frequencies, which are different from the first band of frequencies, for transmission to and from the second base station. The second RF circuit also operates to shift signals received or to be transmitted within the second band of frequencies, to a band of frequencies substantially contiguous with a portion of the first band of frequencies. The band of frequencies substantially contiguous with a portion of the first band of frequencies includes a range of frequencies near the highest frequency of the first band of frequencies that are processable using the same baseband circuitry as for the first band of frequencies, but sufficiently removed to prevent the intermixing of signals between these bands of frequencies from interfering with each other. The common conversion and demodulation/modulation baseband circuitry of the radiotelephone operates with either the first band of frequencies or the band of frequencies shifted above, but substantially contiguous with a portion of the first band to process signals transmitted to and from both base stations.

All transmission and reception of signals is through separate antenna systems. Antennas for each frequency range are advantageously selected to efficiently receive signals in the first and second frequency bands for which they have lengths that are typically a fraction of the wavelength of a frequency contained within the first and second frequency band. Filter circuitry selectively interconnects each antenna to the first and second RF circuits and directs received signals to the appropriate one of the first and second RF circuits capable of handling the frequency of the received or transmitted communication signal.

Transmit power levels in both the first and second bands of operation are monitored and regulated by the base station supervisory sub-systems to deliver appropriate effective radiated power levels for proper RF link performance. Base station regulation of the transmit power level insures satisfactory end-to-end communication performance.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims.

### Brief Description of the Drawing

FIG. 1 is a schematic of a wireless telephone system having two distinct interface systems widely separated in frequency;
FIG. 2 is a graph of representative frequency spectra which may support differing interface systems;
FIG. 3 is a schematic of a radiotelephone handset operative in the interface systems described in the wireless radiotelephone systems depicted in FIGS. 1 & 2.

### Detailed Description

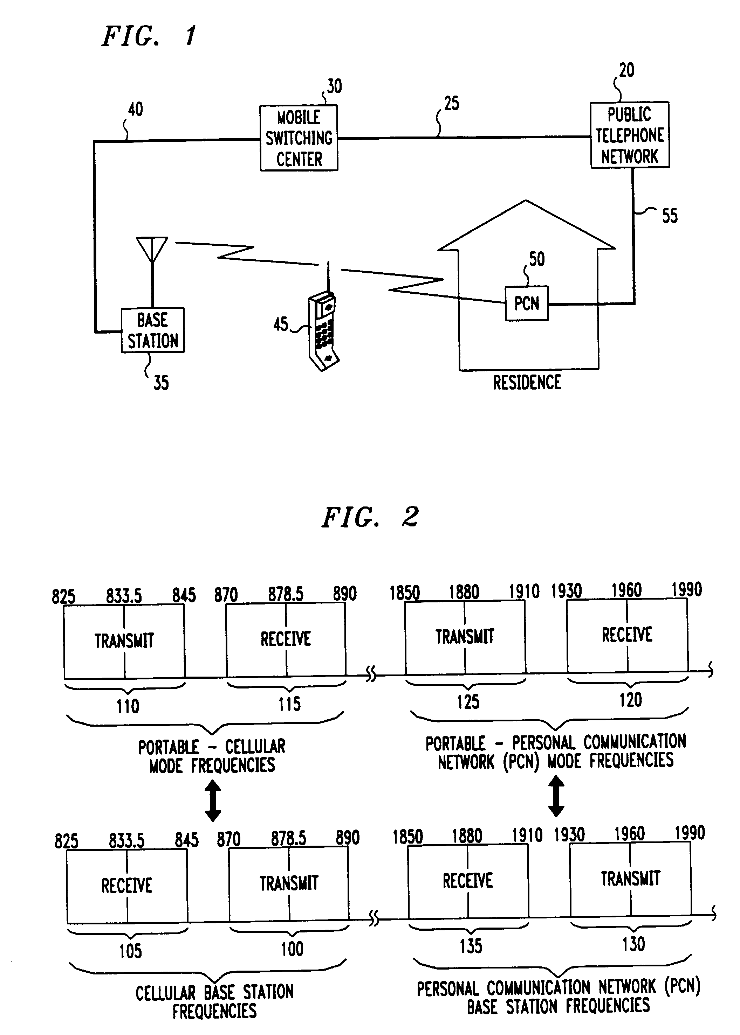

An arrangement of wireless communications systems may involve a variety of individual air interfaces having differing operating frequencies and characteristics, such as is diagrammatically shown in FIG. 1. A public telephone network **20** is shown connected, via trunk **25**, to mobile switching center (MSC) **30** which serves as the control center for a cellular telephone system. MSC **30** is connected to base station (BS) **35**, via trunk **40**. BS **35** includes the necessary control and radio transmission and reception equipment to provide supervisory, control and communication channels to a plurality of radiotelephone handsets typically served in the coverage area of the base station. In this scenario a user of radiotelephone device **45** communicates with the public land telephone network through a cellular telephone network.

Public telephone network **20** is also connected to a residential personal communications network (PCN) **50** base station, via trunk **55**. Radiotelephone device **45** is also used to communicate with public telephone network **20** through PCN **50**. As such, radiotelephone device 45 is capable of operating in multiple radiotelephone service areas. The mode of operation is determined by interactions of the handset with either BS **35** or PCN **50**.

The serving area of a cellular network BS generally covers a geographical extent of several square miles, while the area of coverage for a PCN base station is measured in terms of square feet. The interfaces in the cellular and PCN areas are also different. One significant difference relates to the frequency bands utilized for communications. Typically, the cellular system uses frequencies in the 800 to 900 MHz frequency band range (i.e. a FCC licensed frequency range), while PCN systems operate at a frequency close to or within the 1850 MHz to 1990 MHz frequency range. The wide difference between these frequencies is an inhibiting factor in enabling a single radiotelephone device unit to function in both wireless coverage areas. Radiotelephone device 45 is adapted to be operable with each frequency band and allow communications to both, within a single circuit.

Suitable illustrative frequency ranges for efficient use with radiotelephone device 45, operative in both kinds of wireless systems and described below, are shown in the frequency graph of FIG. 2. A typical cellular base station, such as BS **35** may transmit at a band of frequencies encompassing a range of 870 MHz to 890 MHz **100** and receive communication signals within a band of frequencies from 825 MHz to 845 MHz **105**. The portable radiotelephone device while operating in a cellular mode would transmit in the frequency band of 825 MHz to 845 MHz **110** with a corresponding receiving band of frequencies from 870 MHz to 890 MHz **115**.

PCN frequency bands of operation use a higher frequency band, significantly different from the present frequency band used by conventional wireless telephone systems. Portable radiotelephone device 45 is operative to receive radiotelephone signals at a band of frequencies from 1930 MHz to 1990 MHz **120** and transmit radiotelephone signals at a frequency band of 1850 MHz to 1910 MHz **125**. The PCN base station unit is operative to transmit signals at a frequency band from 1930 MHz to 1990 MHz **130** and receive signals within the frequency band from 1850 MHz to 1910 MHz **135**. These specified frequency bands are illustrative of advantageous frequency bands and are not intended to be limiting. Other frequency selections will suggest themselves to those skilled in the art.

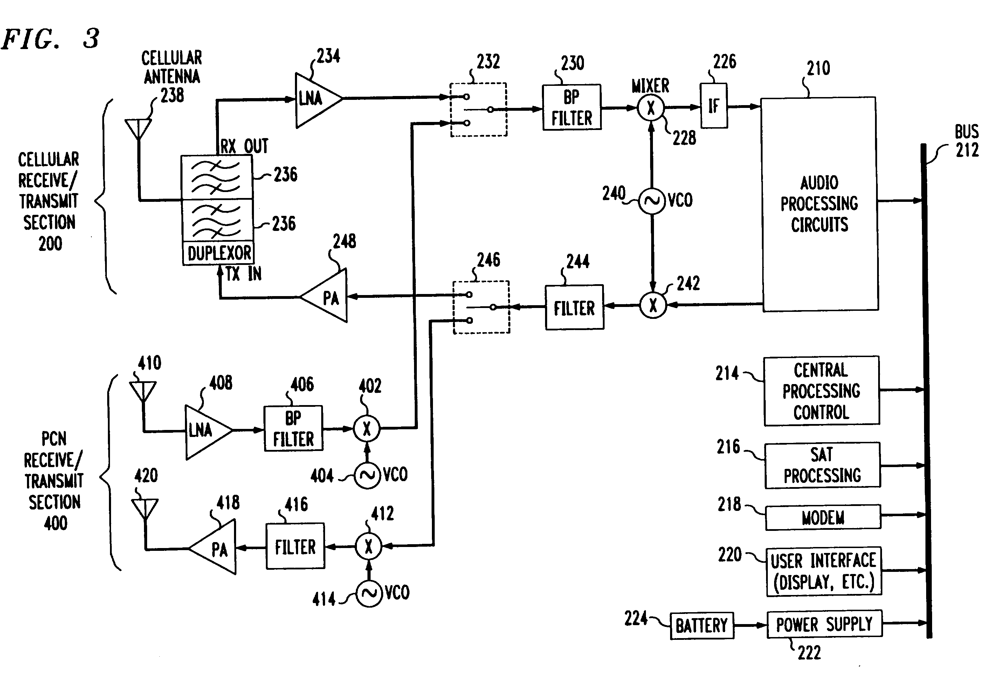

A radiotelephone device, constructed to efficiently utilize the above described plurality of radio frequency band spectra, is shown in the schematic of FIG. 3. The radio telephone device, shown in block schematic, includes a cellular receive section (870-890 MHz) and transmit section (825-845 MHz) **200**; and a PCN receive section (1930-1990 MHz) and transmit section (1850-1910 MHz) **400**. The circuits for processing of baseband signals for cellular (wide area) and PCN (local) operation includes the audio processing circuit **210**, which includes reception, transmission, input and output circuitry all coupled to an internal control, data, address bus **212**. Also connected to the bus are a central processing control unit **214**, comprising a microcomputer, a supervisory audio tone (SAT) processing circuit **216** for handling supervisory signals provided from the base stations and a modem **218** for handling digitally transmitted call set-up and control signals. A user interface and display **220** is also connected to the bus for allowing user voice intercom and control input and for providing status and operative information to the user. Power for the radiotelephone device is supplied by battery **224** whose output power is processed in power supply **222**.

Audio processing circuit **210** accepts incoming signals from the output of receiving circuitry for either the cellular or PCN frequency ranges. This receiving circuitry, described below, converts incoming RF frequencies from either the first band of frequencies or the contiguous band of frequencies to intermediate frequencies, (IF), with a frequency range from 45 to 90 MHz, then audio processing circuit **210** demodulates these signals to produce a baseband signal. Audio processing circuit **210** is coupled to IF circuit **226**, including an FM detector (not shown), which in turn is fed by the output of mixer **228**. A reference voltage controlled oscillator **240** supplies the mixing frequency applied to mixer **228**. Mixer **228** is connected to accept received signals from an appropriate band pass filter **230** which receives its input automatically through switch **232** via terminal "a" for cellular receive section **200** or via terminal "b" for PCN receive section **400**. The front end of cellular receive section **200** includes low noise amplifier (LNA) **234** connected to receive output through duplexer **236** from cellular antenna **238**. The front end of PCN receive section **400** includes mixer **402** which down converts signals received in the PCN frequency band to frequencies shifted above but substantially contiguous with a portion of the cellular bands of frequencies utilized by cellular receive section **200**, so that the same receiving circuitry is employed to process incoming RF signals in both frequency ranges. Reference voltage control oscillator **404** supplies the mixing frequency to mixer **402**. Mixer **402** is connected to accept signals from band pass filter **406** which receives input through low noise amplifier **408** from PCN antenna **410**.

Outgoing communication signals are produced from the baseband and modulated by audio processing circuit **210** to up-convert the baseband signal to IF frequencies. The IF frequency is fed to mixer **242** where the applied mixing frequency is supplied by voltage controlled oscillator **240** and the IF frequency is further up-converted to an RF frequency. Mixer **242** is connected to transmit the up-converted RF signals through an appropriate band pass filter **244** to switch **246** where the RF signals are routed through either cellular transmit section **200** or PCN transmit section **400**.

Cellular transmit section **200** includes power amplifier (PA) **248**, connected to receive input from switch **246**. Cellular frequency signals are transmitted from PA **248** to duplexer **236** and out through antenna **238**.

PCN transmit section **400** includes mixer **412** which up converts signals received from switch **246** at frequencies shifted above but substantially contiguous with a portion of the cellular bands of frequencies to the PCN frequency bands. Reference voltage control oscillator **414** supplies the mixing frequency to mixer **412**. The output of mixer **412** is applied to band pass filter **416**, for passing the signals at appropriate frequencies on to power amplifier **418**. Power amplifier **418** is connected to antenna **420** where the amplified signal gets transmitted at the appropriate PCN frequency.

The control of the mobile radiotelephone device, in selecting the mode of operation, is determined by stored programs included in central processing control **214**. These stored programs contribute to the differing radiotelephone handset operating mode capabilities and includes radiotelephone device initialization and call origination procedures to either PCN or cellular base stations.

The programs stored in central processing control **214** are standard for existing PCN or cellular wireless telephones and are designed to begin operation in a learn mode of operation. During the learn mode interval a base station, such as BS **35** and/or PCN **50** of FIG. 1, transmits a forward control message, which may be received by device 45 to be used in conjunction with that base station. In an illustrative example, an AMPS signaling process is used. Certain numeric fields of the transmitted forward control message instruct the device to transmit both their full telephone number and their ESN (i.e., Electronic Serial Number) when originating or responding to a page. The telephone number and ESN are stored in the memory of central processing control **214** which supervises the devices' operation and are transmitted to the originating base station.

With completion of the learn mode, device 45 is available for service. BS **35** and PCN **50** now transmit overhead messages which are monitored by device 45. If the transmitted ID matches a servicing system identification number stored in the number assignment module (NAM) of central processing control **214**, device 45 is activated and placed in a mode to receive and/or transmit within the operating band of frequencies used by the initiating transceiver. The learning mode of operation is to assure that call connections are made only with qualified handsets. This allows the implementation of fraud protection through security measures as presently used in conventional cellular systems. The device user originates a transmission by inputting a destination telephone number. Before transmissions to the destination number are allowed to begin, the base station reads the telephone number and ESN of device 45. If the telephone number and ESN are listed, the base station assigns the handset to a communication channel.

The operation of the radiotelephone transceiver may be explained by describing its functions in handling the voice and data signals in the various frequency ranges and modes of either cellular or PCN operation. With reference to FIG. 3, when the transceiver is connected to accept cellular frequency voice and data signals, switch **232** is automatically connected to terminal "a". Cellular antenna **238** is then coupled to the cellular filters which provide traditional duplex filtering and separation of RF signals from the received signals. In the instance of a received cellular telephone signal. the signal is transmitted via duplexer **236** to LNA **234**. The output of LNA **234** is applied, via switch **232**, automatically connected through the "a" terminal, to band pass filter **230**. The output of band pass filter **230** is applied to mixer **228**. Mixer **228** is activated by a cellular mixing frequency of 800 to 900 MHz supplied by voltage control oscillator **240**. The output of the mixer is applied to IF circuit **226** which operates in the 85 MHz frequency range and supplies baseband signal output to audio processing circuits **210**.

The transmission of an outgoing cellular radiotelephone signal begins with the application of a broadband signal to mixer **242**. Mixer **242** is activated by a cellular mixing frequency of 800 to 900 MHz supplied by voltage control oscillator **240**. The output of mixer **242** is applied to band pass filter **244**. The output of band pass filter **244** is applied to switch **246**. Signals to be transmitted at cellular frequencies are applied via switch **246**, automatically connected to terminal "a", to power amplifier **248**. The output of power amplifier **248** is transmitted to the output filter of duplexer **236**. The output of duplexer **236** is coupled to cellular antenna **238**.

Outgoing radiotelephone signals in the PCN band of frequencies are supplied from band pass filter **244** through switch **246**, automatically connected to the "b" terminal, to mixer **412**. The output of mixer **412** is activated by a PCN frequency of 1850 to 1990 MHz supplied by voltage control oscillator **414**. The output of mixer **412** is applied via band pass filter **416** to power amplifier **418**. The output from power amplifier **418** is then transmitted in the PCN band of frequencies through PCN antenna **420**.

Incoming radiotelephone signals in the PCN band of frequencies are applied to LNA **408**. The output of LNA **408** is applied to mixer **402**, via band pass filter **406**. The output of mixer **402** is activated by a frequency above but substantially contiguous with a portion of the frequencies of the cellular band of frequencies used by cellular receive/transmit section **200** and is supplied by voltage control oscillator **404**. The band of frequencies above but substantially contiguous with a portion of the cellular band of frequencies used by cellular receive/transmit section **200** is a band of frequencies including those frequencies that are processable by the conversion and demodulation/modulation baseband circuitry, as for the cellular band of frequencies, and are also sufficiently removed from the highest frequency of the cellular band to prevent the intermixing of signals between the cellular and contiguous bands of frequencies from interfering with each other. The output of mixer **402** is applied to band pass filter **230** via switch **232**, automatically connected to the terminal "b" position. The output of band pass filter **230** is processed as described above, for received cellular signals.

Variations of the invention will be readily thought of by those skilled in the art to include other air interface systems and other telecommunications interfaces that ultimately connect to the public telephone network.

## Claims

1. A communication apparatus for receiving RF signals, comprising:
a receiver (238,410) for receiving an RF signal in a first band of frequencies and for receiving an RF signal in a second band of frequencies different from said first band of frequencies;
a first converter (402) that shifts said RF signal in said second band of frequencies to a RF signal in a third band of frequencies substantially contiguous with a portion of said first band of frequencies; and
a plurality of baseband circuits for processing said RF signal input from said first and third band of frequencies.

2. The communication apparatus of claim 1, wherein said plurality of baseband circuits includes a central processing unit (214) that enables reception of RF signals in said first or second band of frequencies.

3. The communication apparatus of claim 1, wherein said plurality of baseband circuits includes a second converter (228) that down-converts said RF signal from one of said first or said third band of frequencies to an intermediate frequency..

4. The communication apparatus of claim 1, wherein said plurality of baseband circuits includes a demodulator (210) that demodulates said intermediate frequency to a baseband frequency.

5. A communication apparatus for transmitting RF signals, comprising:
a transmitter (238,420) for transmitting an RF signal in a first band of frequencies and an RF signal in a second band of frequencies different from said first band of frequencies;
a first converter (412) that shifts an RF signal in a third band of frequencies above but substantially contiguous with a portion of said first band of frequencies to an RF signal in said second band of frequencies; and
a plurality of baseband circuits for processing said RF signal outputted to said first and third bands of frequencies.

6. The communication apparatus of claim 5, wherein said plurality of baseband circuits includes a central processing unit (214) that enables the transmission of RF signals in said first or second band of frequencies.

7. The communication apparatus of claim 5, wherein said plurality of baseband circuits includes a second converter (242) that up-converts an intermediate frequency to one of said first or said third band of frequencies.

8. The communication apparatus of claim 5, wherein said plurality of baseband circuits includes a modulator (210) that modulates a baseband frequency to said intermediate frequency.

9. A communication apparatus for receiving and transmitting RF signals, comprising:
a transceiver (200,400) for receiving and transmitting an RF signal in a first band of frequencies and for receiving and transmitting an RF signal in a second band of frequencies different from said first band of frequencies;
a first converter (402) that shifts said RF signal received from said transceiver in said second band of frequencies to an RF signal in a third band of frequencies, substantially contiguous with a portion of said first band of frequencies; and
a second converter (412) that shifts an RF signal in said third band of frequencies, substantially contiguous with a portion of said first band of frequencies, to an RF signal to be transmitted by said transceiver in said second band of frequencies.

10. The communication apparatus of claim 9, wherein a plurality of baseband circuits processes said RF signal input from or outputted to said first and third bands of frequencies.

11. The communication apparatus of claim 10, wherein said plurality of baseband circuits includes a central processing unit (214) that enables the reception and transmission of RF signals in said first or second band of frequencies.

12. The communication apparatus of claim 10, wherein said plurality of baseband circuits includes an up-converter (242) that converts an intermediate frequency to one of said first or said third band of frequencies.

13. The communication apparatus of claim 10, wherein said plurality of baseband circuits includes a down-converter (228) that converts one of said first or said third band of frequencies to an intermediate frequency.

14. The method of operating in a communication network involving more than one frequency band comprising the steps of:
receiving an RF signal in one of a first band of frequencies and a second band of frequencies, said second band of frequencies different from said first band of frequencies;
wherein said RF signal received in said second band of frequencies is shifted to an RF signal in a third band of frequencies, substantially contiguous with a portion of said first band of frequencies; and
transmitting an RF signal in one of said first band of frequencies and said second band of frequencies;
wherein said RF signal transmitted in said second band of frequencies was shifted forms aid third band of frequencies.

15. The method of claim 14, further comprising the step of up-converting an intermediate frequency to said RF signal in one of said first and said third band of frequencies.

16. The method of claim 15, further comprising the step of modulating a baseband frequency to said intermediate frequency.

17. A method of operating in a communication network involving more than one frequency band, comprising the steps of:
receiving a plurality of RF signals in one of a first band of frequencies and a second band of frequencies, said second band of frequencies different from said first band of frequencies;
wherein said plurality of RF signals received in said second band of frequencies are shifted to a plurality of RF signals in a third band of frequencies, substantially contiguous with a portion of said first band of frequencies; and
transmitting a plurality of RF signals in one of said first band of frequencies and said second band of frequencies;
wherein said plurality of RF signals transmitted in said second band of frequencies were shifted from said third band of frequencies.
